Europäisches Patentamt

(19) European Patent Office

Office européen des brevets

(11) **EP 0 540 713 B1**

(12) **EUROPEAN PATENT SPECIFICATION**

(45) Date of publication and mention
of the grant of the patent:
**05.08.1998 Bulletin 1998/32**

(21) Application number: **92910398.4**

(22) Date of filing: **22.05.1992**

(51) Int. Cl.$^6$: **A01N 63/00**, A01N 63/04,
A01N 25/10

(86) International application number:
**PCT/KR92/00017**

(87) International publication number:
**WO 92/20229 (26.11.1992 Gazette 1992/29)**

(54) **IMPROVED PROCESS FOR PREPARING COATED MICROBIAL PESTICIDES AND PESTICIDES PRODUCED THEREFROM**

VERFAHREN ZUR HERSTELLUNG ÜBERZOGENER MIKROBIELLER PESTIZIDE UND SO HERGESTELLTE PESTIZIDE

PROCEDE AMELIORE DE PREPARATION DE PESTICIDES MICROBIENS ENROBES ET PESTICIDES OBTENUS SELON CE PROCEDE

(84) Designated Contracting States:
**AT BE CH DE DK FR GB IT LI NL**

(30) Priority: **23.05.1991 KR 1991832**

(43) Date of publication of application:
**12.05.1993 Bulletin 1993/19**

(73) Proprietor:
**KOREA RESEARCH INSTITUTE OF CHEMICAL TECHNOLOGY
Daejeon (KR)**

(72) Inventors:
- **BOK, Song Hae
  Chung-ku, Daejeon (KR)**
- **LEE, Hang Woo
  Yuseong-ku, Daejeon (KR)**
- **SON, Kwang Hee
  Dong-ku, Daejeon (KR)**
- **KIM, Sung, Uk
  Seo-ku, Daejeon (KR)**
- **LEE, Jee Woo
  Seoul (KR)**
- **KIM, Do Yeob
  Yunseong-ku, Daejeon (KR)**
- **KWON, Yong, Kook
  Seo-ku, Daejeon (KR)**

(74) Representative:
**von Samson-Himmelstjerna, Friedrich R., Dipl.-Phys. et al
SAMSON & PARTNER
Widenmayerstrasse 5
80538 München (DE)**

(56) References cited:
EP-A- 0 017 565          EP-A- 0 102 702
EP-A- 0 353 689          EP-A- 0 373 837
WO-A-91/01641            WO-A-91/05475
DD-A-  250 456           DD-A-  267 420
DD-B-  250 456           FR-A- 2 501 229
FR-A- 2 532 818          HU-A-   52 150
JP-A-56 002 908          US-A- 4 647 537
US-A- 4 668 512          US-A- 4 818 530

- **PATENT ABSTRACTS OF JAPAN, unexamined applications, section C, Vol. 14, No. 290, 22 June 1990 (22.06.90) The Patent Office Japenese Government page 13 C 731 see Abstract No. 2-91010 (T. MIURA).**

Remarks:
The file contains technical information submitted after the application was filed and not included in this specification

## Description

Technical Field

The present invention relates to an improved process for preparing microbial pesticides and products prepared therefrom; and, more specifically, to a process which comprises coating microorganisms antagonistic to harmful insects and microorganisms causing plant diseases with natural biopolymers which are pre-processed to form a gel or paste.

Background Art

Increasingly, the environmental pollution problem has become the subject of everyone's concern: the land and water pollution caused by excessive use of various chemicals, e.g., chemical pesticides, has especially become a controversial issue due to the serious nature of the health and ecological damages therefrom.

Accordingly, in order to ameliorate the environmental pollution problem caused by the use of toxic chemical substances, studies have been made in search for a viable solution for the biological control of plant pathogens through the use of naturally occurring microorganisms.

Specifically, efforts have been made to develop inexpensive and pollutant-free pesticides employing antagonistic microorganisms. However, owing to their inefficiency and other deficiencies associated with the products, the results have been less satisfactory.

For instance, the invention disclosed by Chet et al. in US-A-4,748,021 is directed to antifungal compositions containing Trichoderma which is active against Fusarium. In a preferred embodiment of their invention, however, the soil is sterilized, e.g., with methyl bromide before the application of a biocontrol composition containing a new microorganism called T-35. According to their invention, the biological composition comprising food base which simply functions as nutrients, additionally contains a certain chemical adhesive to play its roll. Because of these restrictive requriements, the Chet invention lacks practicablity or is of limited use.

Vesely et al. in US-A-4,259,317 disclose a pulverulent preparation containing, as its active ingredient, a high concentration of Pythium oligandrum oospores to be applied onto sugar beet seeds. The finely powdered preparation disclosed in the Vesely patent adheres to the seed surface. The preparation consists of a dried and ground fermented farinaceous substrate on which Pythium oligandrum is bred under conditions favoring the sporulation, particularly in the presence of a liquid nutrient containing calcium chloride while irradiating the fermenting substrate. The need to employ the irradiation process and liquid nutrient, among other things, renders the Vesely invention less viable; and the farinaceous substrate employed simply functions as nutrient.

Levy(US-A-4,985,251) claims an insecticidal composition comprising at least one superabsorbent solid organic polymer comprising hydrophilic acrylamide or acrylate polymers, and a liquid carrier, e.g., water or oil, which makes it difficult to handle and store the composition. Furthermore, the required use of organic polymers such as acrylamide or acrylate polymers in fact undermines the very purpose of developing a biodegradable pesticide.

Jung et al. (EP-A-0 017 565) describe a process for encasing nitrogen-fixating microorganisms, e.g. of the genus Rhizobium, in a polymer gel matrix on the basis of crosslinked polysaccharides. In said process, the polysaccharide is dissolved in water at temperatures of 70 to 80°C and crosslinking is effected preferably by heat treatment, treatment with metal salts or by synergistic treatment with a second polysaccharide. After adding a liquid culture of the microorganism the gel matrix is formed by cooling. The obtained formulations can be used as fertilizers and are destined for the delivery to soil. A similar process for encasing nitrogen-fixating microorganisms in polymer gels for use as fertilizers is disclosed in FR-A-2 501 229.

Shigemitsu (US-A-4,647,537) discloses a method for preparing a pesticide containing living biocontrol microorganisms employing carrageenan; Marois et al. (4,724,147) describe a method for preparing pellets containing living biocontrol fungi employing an alginate mixture; and Lewis et al. (US-A-4,668,512) teach a method for preparing pellets containing living biocontrol fungi, ground wheat bran and alginate.

However, the microbial pesticides formulated in accordance with these prior art processes do not provide sufficient adhesiveness to the delivery targets such as plant leaves, blades, stems and crops and, therefore, they are less effective and uneconomical.

As a result, needs have continued to exist for the development of a pollution-free pesticide prepared by using a simple economical process, which is capable of delivering microbial pesticides to a broad range of control subjects with a high degree of efficiency.

Disclosure of Invention

In accordance with the present invention, it has been discovered that coated microbial pesticides prepared by way of coating microorganisms antagonistic to harmful insects and microorganisms causing plant diseases with natural biopolymers can achieve the desired results of providing pollution-free pesticidal effect against a broad range of plant diseases caused by various harmful insects and microorganisms with the concomitant removal of various deficiencies associated with the prior art biological pesticides.

Specifically, the microbial pesticide of the present invention is capable of effectively delivering its bioactive materials to the control subjects such as harmful insects, plant pathogenic fungi, weeds and the like. Further, said pesticide can be prepared economically in accordance with the present invention.

The process for preparing the microbial pesticide of the present invention comprises:

(a) mixing with water and heating a biopolymer selected from the group consisting of microbiologically metabolizable biopolymer-containing natural substances, microbiologically metabolizable biopolymers extracted therefrom, and microbiologically metabolizable derivatives thereof into the form of a gel or paste at a temperature ranging from 100°C to 121°C, wherein said biopolymer is one or more substances selected from the group consisting of grains, tubers, tuberous roots and starch extracted therefrom; natural wax; and derivatives thereof;
(b) cooling said biopolymer gel or paste to a temperature ranging from room temperature to 60°C;
(c) mixing or coating one or more microorganisms antagonistic to harmful insects and microorganisms causing plant diseases with said cooled biopolymer gel or paste; and then
(d) formulating and drying the microorganism-biopolymer gel or paste mixture.

The term "microorganism antagonistic to harmful insects and microorganisms causing plant diseases" (also referred to as "antagonistic microorganism") used in the present invention is intended to mean a microorganism which eradicates such control subjects as noxious insects, plant pathogenic fungi or weeds, etc., by way of producing and releasing certain bioactive materials, e.g., antibiotics, which are selectively toxic or destructive against the control subjects; or by decimating the control subjects by providing a suppressive or competitive mechanism.

The "bioactive materials" referred to in the present invention are those materials that function as a pesticide.

The term "pesticide" as used herein is intended to include herbicides, insecticides, algicides, bactericides, fungicides, nematicides and the like.

The term "microorganism" as used in the present invention covers a broad spectrum of microorganisms including Gram-negative and positive bacteria, actinomycetes, fungi, yeasts, protozoa, algae and their spores and so on. Exemplary antagonistic microorganisms which may be employed in the present invention include: plant pathogenic fungus-inhibitory microorganisms such as Bacillus subtilis subsp. Krictiensis ATCC 55078 and 55079, Pseudomonas pyrocinia ATCC 15958, Pseudomonas fluorescence ATCC 27663, Gliocladium virens ATCC 52045, Trichoderma reesei ATCC 28217, Trichoderma harzianum ATCC 52445, Trichoderma hamatum ATCC 52198, Trichoderma viride ATCC 52440 and Streptomyces cacaoi subspecies asoensis ATCC 19093; insecticidal microorganisms such as Bacillus thuringiensis ATCC 13367, Beauveria bassiana ATCC 26851, 48585 and 48023, Hirsutella thomsonii ATCC 24874, Metarhizium flavoviride ATCC 32969 and Verticillium lencanii ATCC 46578; and weed-controlling microorganisms such as Colletotrichum gloeosporioides f. sp. jussiaeas ATCC 52634.

The process of the present invention employs a biopolymer selected from the group consisting of microbiologically metabolizable biopolymer-containing natural substances, microbiologically metabolizable biopolymers extracted therefrom, and microbiologically metabolizable derivatives thereof.

Said biopolymers include: grains such as rice, wheat, corn, barley, bean, Italian millet, Indian millet, Chinese millet and buck wheat; tubers such as potato; tuberous roots such as sweet potato and casaba; starches extracted therefrom; and derivatives thereof; and may further include: agar, gelatin, chitosan, gelrite[TM], natural wax, natural gum and derivatives thereof.

The biopolymer as described above not only satisfies the conventional requirements for an effective pesticide delivery system, but also provides various additional advantages.

First, said polymer can serve as a source of metabolic nutrients to the antagonistic microorganisms; and, therefore, is conducive to the growth and propagation of said microorganisms and the production of bioactive materials.

Secondly, the delivery of the pesticidal components is achieved through a natural process: that is, the antagonistic microorganisms take on the natural biopolymer and catabolize them, thereby attaining a sustained delivery system of bioactive materials.

Thirdly, the natural biopolymer, if processed to a gel or paste, becomes highly adhesive to the delivery targets; and, therefore, the microbial pesticide carried thereby can be effectively delivered to a variety of delivery targets or environment such as soil, water, plants, etc.

Fourthly, the biopolymers as well as the microorganisms are originated from natural environment; and, therefore, the microbial pesticides employing them are basically pollution-free.

Fifthly, the biopolymers employed are mostly inexpensive natural products which are available in abundance; and, therefore, the microbial pesticides of the invention can be prepared at a low cost.

The antagonistic microorgansim should be added or coated with the pre-processed gel-like biopolymer at least in a propagable amount, but not in an excessive amount lest the polymer fulfill its function. Accordingly, the antagonistic microorganism is employed preferably within the range of about $10^4$ to $10^{14}$ cells, more preferably $10^6$ to $10^9$ cells per gram of fully dried microbial pesticide, depending on the microorganism and the natural polymer employed.

Some of the biopolymer materials may be made into a gel or paste by boiling or steaming them at a temperature between 100°C and 121°C for 10 to 60 min and mashed to obtain the gel or paste. Certain other materials can be made into a gel or paste by admixing the materials with water and then heating at a temperature between 100°C and 121°C.

Said boiling, steaming or heating is preferably carried out at a sterilizing temperature, e.g., 121°C. This eliminates the possibility of growth of contaminants found in natural polymers, and enables the antagonistic microorgansisms to have an advantage in colonization.

The heated natural polymers should be cooled to a temperature comfortable to the antagonistic microorganisms, preferably within a range between a room temperature and about 60°C.

The cooled gel or paste is then mixed with said one or more antagonistic microorganisms. In this step, the culture broth containing the antagonistic microorganisms or the cells and/or spores per se isolated from said culture may be mixed with the prepared gel or paste. Alternatively, lyophilized cells can be directly mixed with said gel or paste.

The mixture of the antagonistic microorganisms and the natural biopolymer can be formulated into powder, pellets, granules, etc. using a conventional formulating machine; and then air-, heat- or freeze-dried to obtain the desired microbial pesticide.

In a continuous process, the antagonistic microorganisms may be liquid-cultured and the cells and/or spores are isolated; while the processed natural biopolymers may be mixed with the culture waste broth, in order thereby to minimize or avoid any pollution or waste problem, and heated to obtain a gel or pasty matrix. After cooling the gel or pasty matrix, the antagonistic microorganism is coated thereon and the coated matrix is formulated and dried.

The coated microbial pesticide of the present invention may further comprise one or more additives such as: nutrient supplements for promoting the growth and propagation of the microorganism or the production of bioactive materials; and/or a microorganism stabilizer for protecting the microorganism during the immobilizing and/or drying process.

Representative microorganism stabilizers include: glycerol, skim milk, milk, dry milk and animal or plant oil.

The nutrient supplements may include: various carbon and nitrogen sources such as cellulose powder, soy bean meal, cotton seed meal, various animal or plant peptone, milk, skim milk, chitin powder, compost powder, wheat bran, corn extract, yeast extract, molasses, glucose, sucrose, dextrin and corn syrup; trace elements such as iron, manganese, zinc and cobalt; soil; soil extract and other materials which are beneficial for increasing the viability of the microorganism. In addition, other materials which improve the properties of the natural biopolymer may be included in the pesticide.

These additives may be added to the collection of, e.g., microorganism cells and the gel or pasty matrix before or simultaneously with the mixing. However, it is preferable to premix the microorganism and the additives.

The coated microbial pesticide may be directly applied to soil or plant; the coated microbial pesticide, due to its excellent adhesiveness, can be applied to growing plants or their products under storage or during transportation thereof; and also be applied near the roots or cuts for protection againt pathogens.

The coated microbial pesticide can further be applied to a water culture. To apply the microbial pesticide to a plant growing in a water culture, a floatable pesticide may be provided by coating a floatable material with the microbial pesticide of the present invention. The present invention may employ various natural floatable materials including: puffed grains; floatable agricultural products such as rice bran, nut shell, barley bran, corn husk, wheat straw, barley straw, rice straw, corn stalk, millet stalk, leaves and blades; and sawdust, etc. In a water culture, the disease usually occurs at the water surface, i.e., at the boundary between the part submerged under water and the part exposed from water. Because the floatable pesticide thus obtained floats above the water surface and adheres to said border line areas of the plant, it is very effective to control said site-specific diseases.

It is also possible to coat seeds with the microbial pesticide of the present invention. The seeds so coated are protected from the pathogens; and, therefore, their germinating efficiencies can be improved.

Further, plant seeds can be coated with such other microbial pesticides of the present invention that facilitate the sprouting of the seeds. Specifically, the seeds further treated with a natural pesticide coated with nitrogen-fixing microorganisms, e.g., Rhizobium sp., will have the benefit of securing nutrients from the latter microorganisms.

In the chain of events that may occur after application of the coated microbial pesticide, e.g. , application to the soil or plant $\rightarrow$ growth and propagation of antagonistic microorganism $\rightarrow$ production of bioacitve material $\rightarrow$ pesticidal action, the natural biopolymer further functions as a protector and nutrient for the antagonistic microorganism, and, therefore, promotes the growth and propagation of the microorganism and production of the bioactive material.

The coated microbial pesticide, due to its excellent adhesiveness, may be applied directly to the soil and the plant; and, therefore, its antagonism may continue for a prolonged duration. In addition, since the natural biopolymers as well as the microorgaisms are originated from the natural environment, the pesticides produced therefrom are basically natural and pollution-free. Moreover, because the natural biopolymer is made of very inexpensive materials in accordance with a simple process, the present invention is highly economical.

4

The following examples are intended to further illustrate the present invention, without limiting the scope of the invention.

Example 1 and Comparative Example 1

1ℓ of Erlenmeyer flask was filled with 200mℓ of a sterilized medium(tryptone 1%, yeast extract 0.5%, NaCl 1%, glucose 1%, pH 7.0) and 5mℓ of seed culture(absorbance at 550nm, 0.4) of Bacillus subtilis subsp. krictiensis ATCC 55079 was inoculated thereon, which was then incubated at 37°C for about 12 hours with shaking. Thereafter, the cells were harvested using a high-speed centrifuge (8000rpm, 10min, Sorvall ℡, GS-3 rotor) under a sterile condition.

Each of the natural biopolymers listed in Table 1 was mixed with water; heated at the temperature range of 80 to 121°C for 10 to 60 min to a gel or pasty state; and then cooled to a room temperature. In this step, carboxymethyl cellulose and salts of polygalacturonic acid as Comparative groups were not subjected to the heat treatment because they formed gel without heating.

The gel or paste prepared above was mixed with the microbial cell pellet in a quantity of the cell number indicated in Table 1; and mixed to a homogeneous state. The resulting mixture was formulated as granules (diameter 0.1 to 5mm) and air-dried to obtain the desired coated microbial pesticide.

The pesticide was dissolved and diluted in distilled water and spread over a potato dextrose agar plate, which was then incubated at 30°C for 24 hours. The viable cell number in the desired pesticide was counted in terms of the number of colonies formed on the agar plate.

From the cell number counted after and before the coating and drying, the viability(%) of the microorganism was determined according to the following equation and the results are provided in Table 1.

$$\text{Viability(\%)} = \frac{\text{Cell No. after coating and drying}}{\text{Cell No. initially inoculated}} \times 100$$

Table 1

| Viability of Coated Microbial Pesticides Employing Bacillus sp. | | | |
|---|---|---|---|
| Natural Biopolymer | Cell No. initially added (cell/g) | Cell No. after coating and drying (cell/g) | Viability (%) |
| Bean | $2 \times 10^{10}$ | $1 \times 10^{9}$ | 5 |
| Foxtail millet | $2 \times 10^{10}$ | $8 \times 10^{6}$ | 0.04 |
| Chinese millet | $2 \times 10^{10}$ | $2 \times 10^{9}$ | 10 |
| Corn starch | $1 \times 10^{10}$ | $1 \times 10^{6}$ | 0.01 |
| Wheat | $1 \times 10^{10}$ | $5 \times 10^{7}$ | 0.5 |
| Barley | $2 \times 10^{10}$ | $1 \times 10^{7}$ | 0.05 |
| Rice | $2 \times 10^{10}$ | $1 \times 10^{7}$ | 0.05 |
| Potato starch | $1 \times 10^{10}$ | $4 \times 10^{6}$ | 0.04 |
| Sweet potato | $2 \times 10^{10}$ | $1.5 \times 10^{8}$ | 0.80 |
| Gelatin | $2 \times 10^{10}$ | $1 \times 10^{5}$ | 0.0005 |
| Agar | $1 \times 10^{10}$ | $1.3 \times 10^{6}$ | 0.01 |
| Arabia gum | $2 \times 10^{10}$ | $7 \times 10^{8}$ | 3.5 |
| Gelrite™ | $2 \times 10^{10}$ | $2 \times 10^{7}$ | 0.10 |
| Buck wheat | $2 \times 10^{10}$ | $9 \times 10^{8}$ | 4.5 |
| Casaba | $2 \times 10^{10}$ | $9 \times 10^{8}$ | 4.5 |
| 〈Comparative Example〉 | | | |
| starch CMC[a] | $2 \times 10^{10}$ | $7 \times 10^{7}$ | 0.4 |
| Polygalacturonic acid | $2 \times 10^{10}$ | $1 \times 10^{5}$ | 0.0005 |
| Chitosan+CMC[a] (1:1, w/w) | $2 \times 10^{10}$ | $5 \times 10^{8}$ | 2.5 |
| note) a: carboxymethyl cellulose | | | |

As shown in Table 1, a sufficient number of Bacillus sp. cells remained viable after the coating and drying process employed in accordance with the present invention.

Example 2

Various coated microbial pesticides employing Pseudomonas fluorescence ATCC 27663 as an antagonistic microorganism and the materials listed in Table 2 as a natural biopolymer were prepared according to the same method as described in Example 1.

Viable cell number was counted after the coating and drying process and the viability(%) of microorganism in the coated microbial pesticide was determined using the formula given above. The results are shown in Table 2.

Table 2

| Viability of Coated Microbial Pesticides Employing Pseudomonus sp. | | | |
|---|---|---|---|
| Natural biopolymer | Cell No. initially added (cell/g) | Cell No. after coating/drying (cell/g) | Viability (%) |
| Chinese millet | $1 \times 10^{9}$ | $8 \times 10^{6}$ | 0.8 |
| Potato starch | $1 \times 10^{9}$ | $9 \times 10^{6}$ | 0.9 |

Table 2 (continued)

| Viability of Coated Microbial Pesticides Employing Pseudomonus sp. | | | |
|---|---|---|---|
| Natural biopolymer | Cell No. initially added (cell/g) | Cell No. after coating/drying (cell/g) | Viability (%) |
| Sweet potato starch | $1 \times 10^9$ | $2 \times 10^8$ | 20 |
| Casaba | $1 \times 10^9$ | $6 \times 10^8$ | 60 |

As can be seen from Table 2, a sufficient number of Pseudomonas sp. cells remained viable after the coating and drying.

Example 3

The same procedure of Example 1 was repeated in a sterilized YM medium(yeast extract 3g, malt-extract 3g, peptone 5g, glucose 10g, distilled water $1\ell$ , pH 7.0) by employing $5m\ell$ of Streptomyces cacaoi subsp. asoensis ATCC 19093(absorbance at 550nm, 0.4).

The data on the viable cell number and the viability are provided in Table 3.

Table 3

| Viability of Coated Microbial Pesticides Employing Streptomyces sp. | | | |
|---|---|---|---|
| Natural biopolymer | Cell No. initially added(cell/g) | Cell No. after coating/drying(cell/g) | Viability (%) |
| Bean | $6 \times 10^9$ | $2.2 \times 10^7$ | 0.4 |
| Corn starch | $5 \times 10^9$ | $1.2 \times 10^7$ | 0.2 |
| Rice | $6 \times 10^9$ | $5.8 \times 10^6$ | 0.1 |
| Gelrite ™ | $6 \times 10^9$ | $1 \times 10^5$ | 0.002 |
| Soil | $6 \times 10^9$ | $1.4 \times 10^8$ | 2.0 |
| Chitosan+ CMC(1:1,w/w) | $6 \times 10^9$ | $3 \times 10^8$ | 5.0 |
| Casaba | $6 \times 10^9$ | $1.8 \times 10^5$ | 3.0 |

Example 4

A coated microbial pesticide as prepared in the same manner as in Example 1, with the exception of employing Bacillus subtilis subsp. krictiensis ATCC 55078 as the antagonistic microorganism and a gel mixture made of potato starch, rye powder and agar powder in the ratio of 6:3:1(w/w) as the natural biopolymer.

The viable cell number in the coated microbial pesticide prepared above was counted after the coating and drying process, and the cell viability(%) was measured. The data is shown in Table 4.

Another coated microbial pesticide was prepared in the same manner as above, with the exception of employing potato starch alone as the natural biopolymer; and its data is compared in Table 4.

Table 4

| Viability of Coated Microbial Pesticides Employing a Mixed Natural Biopolymer(Potato Starch + Rye Powder + Agar Powder) and a Single Natural Biopolymer | | | |
|---|---|---|---|
| Natural biopolymer | Cell No. initially added(cell/g) | Cell No. after coating/drying (cell/g) | Viability (%) |
| Potato starch+ rye + agar powder(6:3:1, w/w) | $2.0 \times 10^{12}$ | $3.3 \times 10^9$ | 0.2 |
| Potato starch only | $1.1 \times 10^{10}$ | $4 \times 10^6$ | 0.04 |

As can be seen from the results in Table 4, the cell viability employing the mixed gel was much higher than that of having the potato starch alone as the natural biopolymer.

Example 5

The effect of a microorganism stabilizer on the viability of microorganisms in the coated microbial pesticide was examined by way of repeating two sets of experiments, one set with and the other without using skim milk, in accordance with the same procedure described in Example 1, employing Bacillus subtilis subsp. krictiensis ATCC 55078. Potato starch was used in all of the experiments as the natural biopolymer.

The comparative results are shown in Table 5.

Table 5

| The Effect of Microorganism Stabilizer on the Viability of Microorganism | | | | |
|---|---|---|---|---|
| Microorganism | Stabilizer (skim milk) | Cell No. initially added(cell/g) | Cell No. after coating/drying (cell/g) | Viability |
| Bacillus subtilis subsp. krictiensis ATCC 55078 | added | $4.0 \times 10^{14}$ | $2.5 \times 10^{14}$ | 63 |
| | not added | $5.7 \times 10^{10}$ | $3.3 \times 10^{6}$ | 0.006 |

As can be seen from Table 5, when the microorganism stabilizer was used, the cell viability became higher.

Example 6

The effect of nutrient supplements on the viability of microorganisms in the coated microbial pesticide was examined.

Bacillus subtilis subsp. krictiensis ATCC 55079 was inoculated on a liquid medium(soybean powder 1%, yeast extract 0.5%, sugar 3%, $K_2HPO_4$ 0.05%, $MgSO_4 \cdot 7H_2O$ 0.05%, pH 7.0), which was incubated at 30°C for 18hrs; and the cells were harvested by centrifugation.

To prepare a gel or pasty matrix, 1,000g of boiled potato and 500g of boiled rye were thoroughly mashed and mixed. In one experiment, the resulting mixture was added with 200g of soybean meal powder, 50g of skim milk and 15g of sugar as a nutrient source and further mixed; while in another experiment, no such addition was made.

Thereafter, the matrix obtained above was cooled to a room temperature, mixed with 300g of wet cells prepared above and then formulated as granules with the diameter of 0.1 to 5mm. The resulting granules were air-dried at a room temperature to obtain the desired coated microbial pesticide.

The viable cell number in the coated microbial pesticide prepared above was counted, and then the pesticide was stood at 30°C under a relative humidity of more than 90% for 24 hours. Then, the viable cell number was counted to evaluate the effect of the nutrients on the proliferation of the coated microorganism.

In addition, the coated microbial pesticide obtained above was incubated at 30°C and under a relative humidity more than 90% for 24hrs, and sterilized. Then, the effect of the nutrients on the production of bioactive material, i.e., antibiotics, was evaluated by measuring the diameter of inhibitory zone on potato-dextrose-agar plates employing Pyricularia oryzae, Rhizoctonia solani, Botrytis cinerea as the respective subject test organisms.

The results are provided in Table 6.

Table 6

| The Effect of Nutrients on the Cell Proliferation and the Production of Bioactive Materials | | | | | |
|---|---|---|---|---|---|
| Nutrients | Cell proliferation | | Production of antibiotics(after 24 hrs) | | |
| | At the zero time | After 24hr incubation | Inhibitory zone(mm) | | |
| | | | P[a] | R[b] | B[c] |
| not added | $4 \times 10^{8}$ | $5 \times 10^{5}$ | 10 | 13 | 0 |

Table 6 (continued)

| The Effect of Nutrients on the Cell Proliferation and the Production of Bioactive Materials | | | | | |
|---|---|---|---|---|---|
| Nutrients | Cell proliferation | | Production of antibiotics(after 24 hrs) | | |
| | At the zero time | After 24hr incubation | Inhibitory zone(mm) | | |
| | | | $P^a$ | $R^b$ | $B^c$ |
| added | $9 \times 10^7$ | $4 \times 10^8$ | 17 | 20 | 19 |
| note) $P^a$: Pyricularia oryzae $R^b$: Rhizoctonia solani $B^c$: Botrytis cinerea | | | | | |

Example 7

The germination rate of seeds treated with a coated microbial pesticide was determined as follows.

$1\ell$ of Erlenmeyer flask was filled with 200m$\ell$ of a sterilized medium(tryptone 1%, yeast extract 0.5%, NaCl 1%, glucose 1%, pH 7.0) and $1 \times 10^9$ cells/m$\ell$ of Bacillus subtilis subsp. krictiensis ATCC 55078 were mixed, which was then incubated at 30°C for about 18hrs. Thereafter, the cells were harvested by centrifugation at 8000rpm for 10min using Sorvall™ high-speed centrifuge(GS-3 Rotor) and suspended in a 10%(v/v) skim milk solution.

Potato starch was kneaded with water, heated at 100°C for 30min to a gel state and then cooled to a room temperature.

The gel thus obtained was mixed with about $10^8$ cells/g of said skim milk solution to a homogeneous state. Then, the mixture was formulated as granules with the diameter of 0.1 to 5mm, and air-dried at a room temperature to obtain the desired coated microbial pesticide.

100 rice seeds were treated with the coated microbial pesticide prepared above and then were sown on a sterilized nutrient-enriched soil, along with 100 untreated rice seeds; all of which were incubated at the temperature range of 25 to 28°C for 15 days. Thereafter, the number of germinated seeds was counted, and the germination rate was calculated as a percentage of the germinated seeds to the total number of sown seeds. The results are shown in Table 7.

Table 7

| Comparison of Germination Rate between Treated and Untreated Seeds | |
|---|---|
| Germination rate of coated seeds (%) | Germination rate of untreated seeds (%) |
| 91 | 73 |

Example 8

The protective effect of the floating-type coated microbial pesticide on the rice blast disease and rice sheath blight was examined as follows.

$8\ell$ of a liquid medium(soybean meal 2%, glucose 1%, MnCl$_2$ · 4H$_2$O 0.005%, NaCl 0.05%, pH 7.0) was charged to a 15$\ell$ fermenter and 200m$\ell$ of Bacillus subtilis subsp. krictiensis ATCC 55079(absorbance at 550nm, 0.4) was inoculated thereon, which was then incubated at 30°C for 48hrs. Then, the cell pellet was concentrated by centrifugation under a sterilized condition and suspended in 500m$\ell$ of a 10%(v/v) sterilized skim milk solution.

7.5$\ell$ of the resultant supernatant from which said microorganism cells were isolated was added to 800g of potato starch, 200g of Indian millet flour, 200g of cotton seed meal powder and 15g of glucose; heated at 100°C with stirring to a pasty state; and cooled to a room temperature.

The resulting paste was mixed with 500m$\ell$ of the solution wherein the cells were suspended to a homogeneous state. Thereafter, this mixture was formulated as granules with the diameter of 0.1 to 5mm and coated with mashed dry lawn leaves at a room temperature to obtain the desired floating-type coated microbial pesticide.

The viable cell number in the coated microbial pesticide obtained above was determined to be $8 \times 10^{11}$ cells/g.

The above pesticide was subjected to the following experiment intended to measure its preventive efficacy of diseases.

Rice was cultivated in pots with sufficient water supply; and, upon its height growing to a length of about 150cm, spores of <u>Pyricularia</u> <u>oryzae</u> were then inoculated to the leaves of rice plants in order to create rice blast disease. After the floating-type coated microbial pesticide was sprayed on the surface of the water in an amount of about 2g per pot, each pot was subjected to a saturated humidity condition under the temperature range of about 25 to 27°C; and, untreated rice plants were also subjected to the same conditon as above. After about two weeks, the diseased areas of the rice leaves were measured for both the treated and the untreated groups, using the standard scale defined in Table 8. From the measurement, the protection rate(%) was derived by using the following equation and the results are shown in Table 9.

$$\text{Protection rate(\%)}=[1-\frac{\text{Diseased areas(\%) of the treated group}}{\text{Diseased areas(\%) of the untreated group}}]\times 100$$

Table 8

| A Standard Scale for Disease Rating | |
|---|---|
| Percent of the diseased leaf area | Disease state |
| 0.0% | No diseased area observed |
| 0.2% | Small diseased areas at old leaves rarely observed |
| 0.5% | Small diseased areas at both old and new leaves rarely observed |
| 1.0% | On an average, one diseased area per two or three leaves observed |
| 2.0% | On an average, one diseased area per one leaf observed |
| 5.0% | Two or three diseased areas per one leaf or overall spread of the diseased areas observed |
| 11.0% | New leaves are curled in a very serious condition |
| 25.0% | Plant bodies are curled |
| 55.0% | Plant bodies are seriously curled or withered, or upper leaves are markedly damaged |
| 100.0% | Plant bodies are completely withered or dead |

Table 9

| Protective Effect of Coated Microbial Pesticide on the Rice Blast Disease and Rice Sheath Blight | | | |
|---|---|---|---|
| Disease | Treatment | Diseased area of the leaves or sheaths(%) | Protection rate (%) (%) |
| Rice blast disease | Treated group | 4.0 | 87 |
| | Control group (untreated group) | 30.0 | 0 |
| Rice sheath blight | Treated group | 1.7 | 81 |
| | Control group (untreated group) | 9.0 | 0 |

<u>Example 9</u>

The pesticidal activity of the coated microbial pesticide was compared with that of a commercially available chemical pesticide, i.e., procymidone.

Coated microbial pesticide(8 x 10$^{11}$ <u>Bacillus</u> <u>subtilis</u> cells viable per 1g of pesticide) was prepared according to the same procedure as in Example 8.

In order to evaluate the controlling effect of said pesticide on gray mold in strawberries, 50g of said pesticide was sprayed on a lot(500cm x 60cm) where strawberries(grade: Hokowase) were cultivated to maturity, two times on a 7-day interval. Then, the attack rate was determined 1 and 2 weeks after the spraying. The attack rate was calculated as a percentage of the number of rotten strawberries over the total number of strawberries. The results are shown in Table 1.

For the sake of comparison, 2.5g of procymidone was sprayed, then the attack rate was measured in the like manner. The results are summarized in Table 10.

Table 10

| Comparison of the Attack Rate between Coated Microbial Pesticide and Procymidone | | |
|---|---|---|
| | Attack rate after 1 week from spraying(%) | Attack rate after 2 weeks from spraying(%) |
| Coated microbial pesticide-treated group | 10 | 24 |
| Procymidone-treated group | 13 | 32 |
| Control group (untreated group) | 20 | 61 |

## Claims

1. A process for preparing a microbial pesticide which comprises:

   (a) mixing with water and heating a biopolymer selected from the group consisting of microbiologically metabolizable biopolymer-containing natural substances, microbiologically metabolizable biopolymers extracted therefrom, and microbiologically metabolizable derivatives thereof into the form of a gel or paste at a temperature ranging from 100°C to 121°C, wherein said biopolymer is one or more substances selected from the group consisting of grains, tubers, tuberous roots and starch extracted therefrom; natural wax; and derivatives thereof;
   (b) cooling said biopolymer gel or paste to a temperature ranging from room temperature to 60°C;
   (c) mixing or coating one or more microorganisms antagonistic to harmful insects and microorganisms causing plant diseases with said cooled biopolymer gel or paste; and then
   (d) formulating and drying the microorganism-biopolymer gel or paste mixture.

2. The process of claim 1, wherein said antagonistic microorganism is selected from the group consisting of Bacillus subtilis subsp. Krictiensis ATCC 55078 and 55079; Pseudomonas pyrocinia ATCC 15958; Pseudomonas fluorescens ATCC 27663; Gliocladium virens ATCC 52045; Trichoderma reesei ATCC 28217; Trichoderma harzianum ATCC 52445; Trichoderma hamatum ATCC 52198; Trichoderma viride ATCC 52440; Streptomyces cacaoi subsp. asoensis ATCC 19093; Bacillus thuringiensis ATCC 13367; Beauveria bassiana ATCC 26851, 48585 and 48023; Hirsutella thomsonii ATCC 24874; Metharhizium flavoviride ATCC 32969; Verticillium lencanii ATCC 46578; and Collectotrichum gloeosporioides f. sp. jussiaeas ATCC 52634.

3. The process of claim 2, wherein the content of said antagonistic microorganism is $10^4$ to $10^{14}$ cells per gram of the pesticide.

4. The process of claim 1, which further comprises: adding one or more microorganism stabilizers and/or one or more nutrient supplements either between step (b) and step (c) or during step (c) of claim 1.

5. The process of claim 4, wherein the stabilizer is selected from the group consisting of glycerol, skim milk, milk, dry milk, plant oil and animal oil.

6. A coated microbial pesticide obtainable by the process of any one of claims 1 to 5 which comprises an antagonistic microorganism coated with microbiologically metabolizable biopolymers.

7. A process for preparing a floating-type coated microbial pesticide comprising a further step of treating the pesticide formulation of claim 6 with a floatable material before its drying process.

8. The process of claim 7, wherein said floatable material is selected from the group consisting of puffed grain, rice bran, nut shell, barley bran, corn husk, wheat straw, barley straw, rice straw, corn stalk, millet stalk, leaves, blades and sawdust.

## Patentansprüche

1. Ein Verfahren zur Herstellung eines mikrobiellen Pestizids, das:

   a) Mischen mit Wasser und Erhitzen eines Biopolymers, ausgewählt aus der Gruppe, bestehend aus mikrobiologisch metabolisierbaren, Biopolymer enthaltenden, natürlichen Substanzen, daraus extrahierten mikrobiologisch metabolisierbaren Biopolymeren, und mikrobiologisch metabolisierbaren Derivaten davon, in die Form eines Gels oder einer Paste bei einer Temperatur im Bereich von 100°C - 121°C, wobei das Biopolymer eine oder mehrere Substanzen ist (sind), ausgewählt aus der Gruppe, bestehend aus Körnern, Knollen, knollentragenden Wurzeln und daraus extrahierter Stärke; natürlichem Wachs; und Derivaten davon;

   b) Abkühlen des Biopolymergels oder der Biopolymerpaste bis zu einer Temperatur im Bereich von Raumtemperatur bis 60°C;

   c) Mischen und Überziehen von einem oder mehreren Mikroorganismen, die gegenüber schädlichen Insekten und Mikroorganismen, die Pflanzenkrankheiten verursachen, antagonistisch sind, mit gekühltem Biopolymergel oder Biopolymerpaste; und dann

   d) Formulieren und Trocknen des Mikroorganismusbiopolymergel- oder des Mikroorganismusbiopolymerpastengemisches
   umfaßt.

2. Verfahren nach Anspruch 1, wobei der antagonistische Mikroorganismus ausgewählt ist aus der Gruppe bestehend aus <u>Bacillus subtilis</u> subsp. <u>Krictiensis</u> ATCC 55078 und 55079; <u>Pseudomonas pyrocinia</u> ATCC 15958; <u>Pseudomonas fluorescens</u> ATCC 27663; <u>Gliocladium virens</u> ATCC 52045; <u>Trichoderma reesei</u> ATCC 28217; <u>Trichoderma harzianum</u> ATCC 52445; <u>Trichoderma hamatum</u> ATCC 52198; <u>Trichoderma viride</u> ATCC 52440; <u>Streptomyces cacaoi</u> subsp. <u>asoensis</u> ATCC 19093; <u>Bacillus thuringiensis</u> ATCC 13367; <u>Beauveria bassiana</u> ATCC 26851, 48585 und 48023; <u>Hirsutella thomsonii</u> ATCC 24874; <u>Metharhizium flavoviride</u> ATCC 32969; <u>Verticillium lencanii</u> ATCC 46578; und <u>Collectotrichum gloeosporioides</u> f. sp. <u>jussiaeas</u> ATCC 52634.

3. Verfahren nach Anspruch 2, wobei der Gehalt an antagonistischem Mikroorganismus $10^4$ - $10^{14}$ Zellen pro Gramm des Pestizides beträgt.

4. Verfahren nach Anspruch 1, das weiterhin umfaßt: Hinzufügen eines oder mehrerer Mikroorganismusstabilisatoren und/oder eines oder mehrere Nahrungsergänzungsstoffe entweder zwischen Schritt b) und Schritt c) oder während des Schritts c) nach Anspruch 1.

5. Verfahren nach Anspruch 4, wobei der Stabilisator ausgewählt ist aus der Gruppe, bestehend aus Glycerol, Rahmmilch, Milch, Trockenmilch, Pflanzenöl und Tieröl.

6. Überzogenes mikrobielles Pestizid, erhältlich nach dem Verfahren nach einem der Ansprüche 1 bis 5, welches einen antagonistischen Mikroorganismus, überzogen mit mikrobiologisch metabolisierbaren Biopolymeren, umfaßt.

7. Verfahren zur Herstellung eines flotierartigen überzogenen mikrobiellen Pestizids, umfassend einen weiteren Schritt zur Behandlung der Pestizidformulierung nach Anspruch 6 mit einem flotationsfähigen Material vor dem Trocknungsverfahren.

8. Verfahren nach Anspruch 7, wobei das flotationsfähige Material ausgewählt ist aus der Gruppe bestehend aus gequollenem Korn, Reiskleie, Nußschale, Gerstenkleie, Kornhülse, Weizenstroh, Gerstenstroh, Reisstroh, Getreidehalm, Hirsehalm, Blättern, Spreiten und Sägemehl.

**Revendications**

1. Procédé pour la préparation d'un pesticide microbien consistant à :

   (a) mélanger avec de l'eau et chauffer un polymère biologique choisi parmi le groupe comprenant les substances naturelles contenant des polymères biologiques métabolisables par des micro-organismes, les polymères biologiques, métabolisables par des micro-organismes, extraits de celles-ci, et les dérivés, métabolisables par des micro-organismes, de ceux-ci, pour former un gel ou une pâte, à une température comprise entre 100 °C et 121 °C, dans lequel ledit polymère biologique est une ou plusieurs matières choisies parmi le groupe comprenant les grains, les tubercules, les racines à tubercules et l'amidon extrait de ceux-ci; la cire naturelle; et leurs dérivés;
   (b) refroidir ledit gel ou ladite pâte de polymère biologique à une température comprise entre la température ambiante et 60 °C;
   (c) mélanger ou enrober un ou plusieurs micro-organismes antagonistes aux insectes nuisibles et aux micro-organismes provoquant des maladies des plantes, avec ledit gel ou ladite pâte de polymère biologique refroidi; et puis
   (d) formuler et sécher le mélange du gel ou de la pâte de micro-organismes et du polymère biologique.

2. Procédé selon la revendication 1, dans lequel ledit micro-organisme antagoniste est choisi parmi le groupe comprenant Bacillus subtilis subsp. Krictiensis ATCC 55078 et 55079; Pseudomonas pyrocinia ATCC 15958; Pseudomonas fluorescens ATCC 27663; Gliocladium virens ATCC 52045; Trichoderma reesei ATCC 28217; Trichoderma harzianum ATCC 52445; Trichoderma hamatum ATCC 52198; Trichoderma viride ATCC 52440; Streptomyces cacaoi subsp. asoensis ATCC 19093; Bacillus thuringiensis ATCC 13367; Beauveria bassiana ATCC 26851, 48585 et 48023; Hirsutella thomsonii ATCC 24874; Metharhizium flavoviride ATCC 32969; Verticillium lencanii ATCC 46578; et Collectotrichum gloeosporioides f. sp. jussiaeas ATCC 52634.

3. Procédé selon la revendication 2, dans lequel la teneur en ledit micro-organisme antagoniste est de $10^4$ à $10^{14}$ cellules par gramme de pesticide.

4. Procédé selon la revendication 1, lequel comprend de plus l'addition d'un ou plusieurs stabilisateurs de micro-organismes et/ou un ou plusieurs suppléments nutritifs, soit entre les étapes (b) et (c), soit lors de l'étape (c) de la revendication 1.

5. Procédé selon la revendication 4, dans lequel le stabilisateur est choisi parmi le groupe comprenant le glycérol, le lait écrémé, le lait, le lait en poudre, l'huile végétale et l'huile animale.

6. Pesticide microbien enrobé, pouvant être obtenu par le procédé selon l'une quelconque des revendications de 1 à 5, lequel comprend un micro-organisme antagoniste enrobé avec des polymères biologiques métabolisables par des micro-organismes.

7. Procédé pour la préparation d'un pesticide microbien de type flottant, comprenant une étape supplémentaire de traitement de la formulation de pesticide selon la revendication 6, avec une matière ayant la capacité de flotter, avant le procédé de séchage de celui-ci.

8. Procédé selon la revendication 7, dans lequel ladite matière ayant la capacité de flotter est choisie parmi le groupe comprenant le grain soufflé, le son de riz, la coquille de noix, le son d'orge, l'enveloppe de maïs, la paille de blé, la paille d'orge, la paille de riz, la tige de maïs, la tige de millet, les feuilles, les brins et la sciure.